Europäisches Patentamt

European Patent Office

Office européen des brevets

(19)

(11) **EP 0 645 645 B1**

(12) **FASCICULE DE BREVET EUROPEEN**

(45) Date de publication et mention
de la délivrance du brevet:
**01.12.1999 Bulletin 1999/48**

(51) Int Cl.6: **G01S 17/58**, G01P 5/00,
G02B 27/14

(21) Numéro de dépôt: **94402083.3**

(22) Date de dépôt: **20.09.1994**

(54) **Sonde vélocimétrique et clinométrique à laser**

Lasersonde für Geschwindigkeits- und Neigungsmessung

Laser probe for velocimetry and clinometry

(84) Etats contractants désignés:
**DE GB IT NL SE**

(30) Priorité: **29.09.1993 FR 9311568**

(43) Date de publication de la demande:
**29.03.1995 Bulletin 1995/13**

(73) Titulaire: **SEXTANT Avionique**
**92366 Meudon la Forêt Cedex (FR)**

(72) Inventeur: **Breda, Jean-Marc**
**F-75015 Paris (FR)**

(74) Mandataire: **Geismar, Thierry et al**
**Cabinet Geismar,**
**90 avenue Mozart**
**75016 Paris (FR)**

(56) Documents cités:
EP-A- 0 406 061          DE-A- 3 833 659
GB-A- 2 260 052

- **JOURNAL OF PHYSICS E. SCIENTIFIC INSTRUMENTS, vol.18, no.8, Août 1985, BRISTOL GB pages 684 - 688 R.H. BAHNEN ET AL. 'Two-component laser Doppler system with Pockels Cell - first measurements in turbulent flows'**
- **ELECTRONICS & COMMUNICATIONS IN JAPAN, PART II - ELECTRONICS, vol.72, no.1, Janvier 1989, NEW YORK US pages 89 - 96, XP119270 FUKUOTA ET AL. 'Two-dimensional Laser Doppler Velocimeter Using Pulse-Modulated Laser Diodes'**

## Description

La présente invention concerne une sonde vélocimétrique à laser, et plus particulièrement une telle sonde comportant des moyens pour engendrer des franges d'interférence, et des moyens de mesure pour déterminer la vitesse d'une particule traversant le champ de franges à partir d'un signal représentatif de la lumière rétro-diffusée par cette particule.

Les sondes vélocimétriques de ce type déjà connu sont généralement constituées des éléments suivants :

- une source de lumière cohérente collimatée telle qu'une diode laser, fournissant un faisceau lumineux à une longueur d'onde $\lambda$;

- un séparateur optique donnant à partir du faisceau émis par la source deux faisceaux identiques parallèles entre eux séparés d'une distance $\underline{a}$;

- une optique de collimation qui focalise les deux faisceaux précédents à une distance F de sa face de sortie. On peut démontrer que, dans la zone de focalisation, les deux faisceaux interfèrent. Le champ d'interférence est constitué de franges rectilignes et parallèles dont l'inter-frange vaut :

$$i = \frac{\lambda F}{a}$$

- une optique de réception qui forme l'image de la zone de focalisation sur un photo-récepteur;

- ce photo-récepteur et son électronique de commande;

- un ensemble de traitement électronique donnant, à partir des informations provenant du photo-récepteur, une information de vitesse.

Une telle sonde fonctionne de la manière suivante.

Lorsqu'une particule traverse le champ de franges, elle rétro-diffuse de la lumière vers l'optique de réception et le photo-récepteur. Ce signal lumineux est modulé par le champ de franges. On démontre que la fréquence temporelle de modulation $f$ vaut

$$f = \frac{v_x}{i}$$

où $v_x$ est la vitesse de la particule dans la direction perpendiculaire aux franges.

L'ensemble de traitement électronique permet de retrouver la fréquence $f$ et donc la vitesse $v_x$ par exemple par la méthode de la transformée de Fourier.

Une telle sonde permet de déterminer une seule composante de la vitesse des particules. Lorsque l'on souhaite connaître deux ou trois composantes, de façon à déterminer la vitesse et l'incidence de la particule par rapport à la sonde, on utilise deux ou trois têtes optiques dont les champs de franges sont perpendiculaires entre eux. Un tel agencement présente les deux inconvénients d'être encombrant et de doubler ou tripler le prix du système.

On a également proposé dans l'article Journal of Physics E. Scientific Instruments, Vol. 18 No. 8, Août 1985, pages 684-688 (BAHNEN) un dispositif de mesure de deux composantes de la vitesse d'un gaz, utilisant un seul laser formant quatre faisceaux convergeant dans un volume de mesure unique. Dans ce document, on utilise une cellule de Pockels qui permet de faire tourner la polarisation du faisceau d'origine, et on fait successivement interférer dans le volume de mesure d'abord deux faisceaux, ce qui fournit une première composante de la vitesse, puis les deux autres faisceaux ce qui fournit la deuxième composante. Les quatre faisceaux ne sont donc pas actifs simultanément et on ne dispose donc pas simultanément des deux composantes de la vitesse.

L'article Electronics and Communications in Japan, Part 2, Vol. 2 No.1, Janvier 1989, pages 89-96 (FUKUOTA) décrit également un procédé fondé, comme le précédent, sur la séparation dans le temps. Toutefois, il utilise non pas une seule source laser, mais deux sources qui sont alternativement commutées. Ici non plus, on ne dispose donc pas simultanément des deux composantes de la vitesse.

La présente invention vise à pallier ces inconvénients.

A cet effet, l'invention a pour objet une sonde vélocimétrique à laser comportant des moyens pour engendrer simultanément au moins deux systèmes de franges d'interférences dans un volume de mesure unique et des moyens de mesure pour déterminer au moins deux composantes de la vitesse d'une particule traversant le champ de franges à partir d'un signal représentatif de la lumière rétro-diffusée par cette particule, caractérisée par le fait que lesdits systèmes de franges ont une même longueur d'onde et que les moyens de mesure sont agencés pour déterminer lesdites au moins deux composantes de la vitesse de la particule par analyse fréquentielle dudit signal.

On utilise donc maintenant, non pas deux faisceaux, mais N, notamment 3 ou 4, on démontre que le volume d'interférence est alors composé de N * (N-1) réseaux de frange, chacun de ses réseaux étant caractérisé par son intensité, son inter-frange et l'inclinaison de ses franges par rapport à un axe pris comme référence.

Lorsqu'une particule traverse un des réseaux, elle rétro-diffuse une intensité lumineuse dont la fréquence de modulation temporelle est proportionnelle à la composante de sa vitesse sur un axe perpendulaire à ce même réseau. Dans le cas général, l'interférence de N faisceaux donne donc N (N - 1) signaux dans

l'espace des fréquences quand une particule traverse le volume de mesure. L'analyse fréquentielle permet donc de retrouver plusieurs composantes de la vitesse de la particule.

Dans un mode de réalisation particulier de la sonde selon l'invention, les moyens pour engendrer les système de franges d'interférence comprennent des moyens pour former quatre faisceaux laser parallèles, ces quatres faisceaux pouvant notamment former les arêtes d'un prisme à base en forme de losange ou de rectangle, et plus particulièrement en forme de carré.

L'interférence de quatre faisceaux donne six réseaux de franges dans le cas général, soit six informations de fréquence. On peut montrer que, dans le cas particulier où les faisceaux sont disposés le long des arêtes d'un prisme à base en forme de losange ou de rectangle, le nombre de réseaux se réduit à quatre. Dans cette configuration, on trouve donc quatre pics dans l'espace des fréquences.

On remarquera que, dans une sonde vélocimétrique telle que décrite ci-dessus, il reste une indétermination sur l'axe de projection correspondant à chacune des vitesses mesurées. Cette indétermination peut être levée de différentes manières.

Tout d'abord, le système de franges peut être engendré à l'aide de faisceaux laser d'intensités différentes, ce qui permet de différencier les pics de fréquence et ainsi de retrouver l'information souhaitée.

Il est également possible de supprimer sélectivement et temporairement au moins un des systèmes de franges.

A cet effet, on peut observer que la plupart des diodes laser, et des lasers en général, émettent des faisceaux fortement polarisés. Les faisceaux qui interfèrent ici sont donc polarisés, en général rectilignement.

Si l'on fait varier la polarisation d'un ou deux plusieurs faisceaux, on supprime ainsi un ou plusieurs réseaux d'interférence. Connaissant les réseaux que l'on supprime et connaissant les fréquences de modulation qui disparaissent simultanément, on lève l'indétermination sur la composante de la vitesse.

Le changement de polarisation peut être obtenu par exemple par rotation mécanique d'une lame demi-onde dans un ou plusieurs faisceaux, ou par introduction d'un rotateur de Faraday commandé électriquement, ou d'un composant électro-optique, ou d'un cristal liquide sur un des faisceaux.

On peut également supprimer un ou plusieurs faisceaux à l'aide d'un cache.

On décrira maintenant à titre d'exemple non limitatif un mode de réalisation particulier de l'invention en référence aux dessins annexés dans lesquels :

- la fig. 1 est une représentation schématique d'une sonde vélocimétrique selon l'invention,

- la fig. 2 est une vue en perspective du séparateur de faisceau utilisé dans cette sonde, et

- les fig. 3a et 3b illustrent le fonctionnement du séparateur de la figure 2.

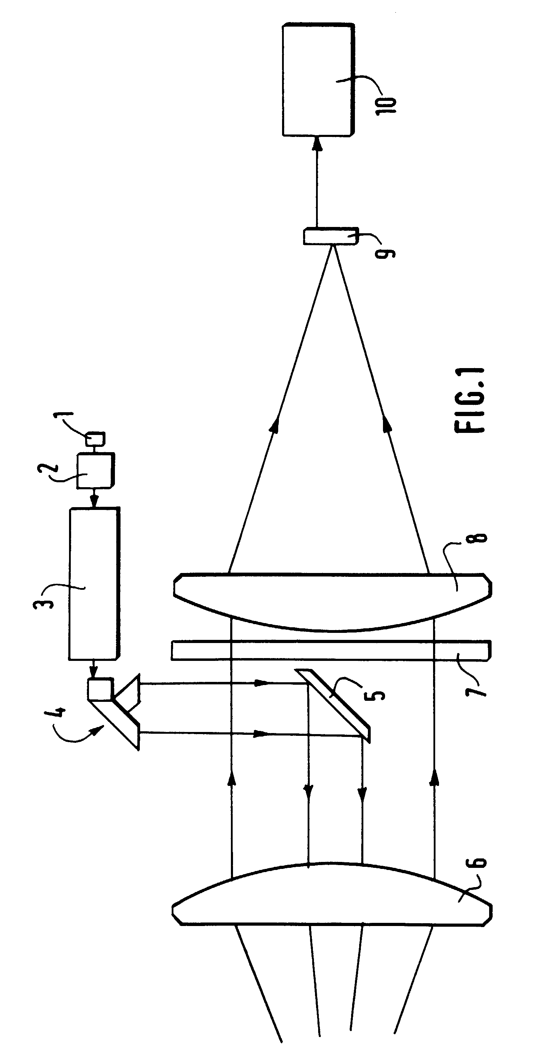

La sonde de la figure 1 comprend une source émettrice 1, par exemple une diode laser monomode à λ = 820 nanomètres, un collimateur 2 pour former un faisceau parallèle, et un anamorphoseur 3 permettant d'obtenir un faisceau à section circulaire.

Les faisceaux issus de diodes laser possèdent généralement une section elliptique. L'anamorphoseur 3 permet de réduire les dimensions du faisceau dans la direction parallèle au grand axe de l'ellipse de manière à former un faisceau à section circulaire. L'anamorphoseur 3 pourrait être réalisé à l'aide de prismes, mais il est de préférence réalisé comme ici sous la forme d'une lentille cylindrique, moins volumineuse et permettant de ressortir de l'anamorphoseur dans la direction du faisceau incident.

Le faisceau en sortie de l'anamorphoseur 3 entre dans un prisme 4 séparateur à quatre voies qui sera décrit ci-après. Le prisme 4 permet d'obtenir en sortie quatre faisceaux laser parallèles alignés sur les quatre arêtes d'un prisme à section carré.

Ces quatres faisceaux sont renvoyés par un miroir 5 en direction d'une optique de collimation 6 constituée de préférence comme ici d'une lentille unique asphérique.

La lentille 6 fait converger les quatre faisceaux lumineux dans la zone de mesure, par exemple située à une dizaine de centimètres, où se forment les réseaux d'interférence.

Les particules traversant cette zone de mesure, et par conséquent les réseaux d'interférence, rétrodiffusent la lumière vers la lentille 6. Cette lumière rétrodiffusée traverse ensuite un filtre optique 7 puis une optique de focalisation 8, par exemple identique à l'optique 6.

L'optique 8 fait converger la lumière rétro-diffusée vers un photo-récepteur 9 qui fournit par conséquent un signal représentatif de cette lumière rétro-diffusée.

Ce signal est transmis à une unité de traitement 10 qui détermine les pics de fréquence de ce signal et en déduit les composantes de la vitesse des particules dans la zone de mesure.

Le séparateur 4 est composé de quatre prismes 11, 12, 13 et 14.

Le prisme 11 possède une section en forme de losange et sa face d'entrée est perpendiculaire au faisceau incident 15. Le prisme 12 a une section en forme de trapèze rectangle et son côté rectangle est appliqué contre le prisme 11 tandis que son côté opposé est perpendiculaire au faisceau incident. Ce côté opposé, de même que le côté du losange 11 opposé au côté d'entrée, sont dans le même plan et sont appliqués contre la face d'entrée du prisme 13.

Ce prisme 13 est un prisme à section trapézoïdale isocèle dans lequel l'entrée se fait par une des faces non parallèles.

Enfin, le prisme 14 est un prisme du même type que le prisme 12, et son côté rectangle est appliqué contre la petite base du prisme 13.

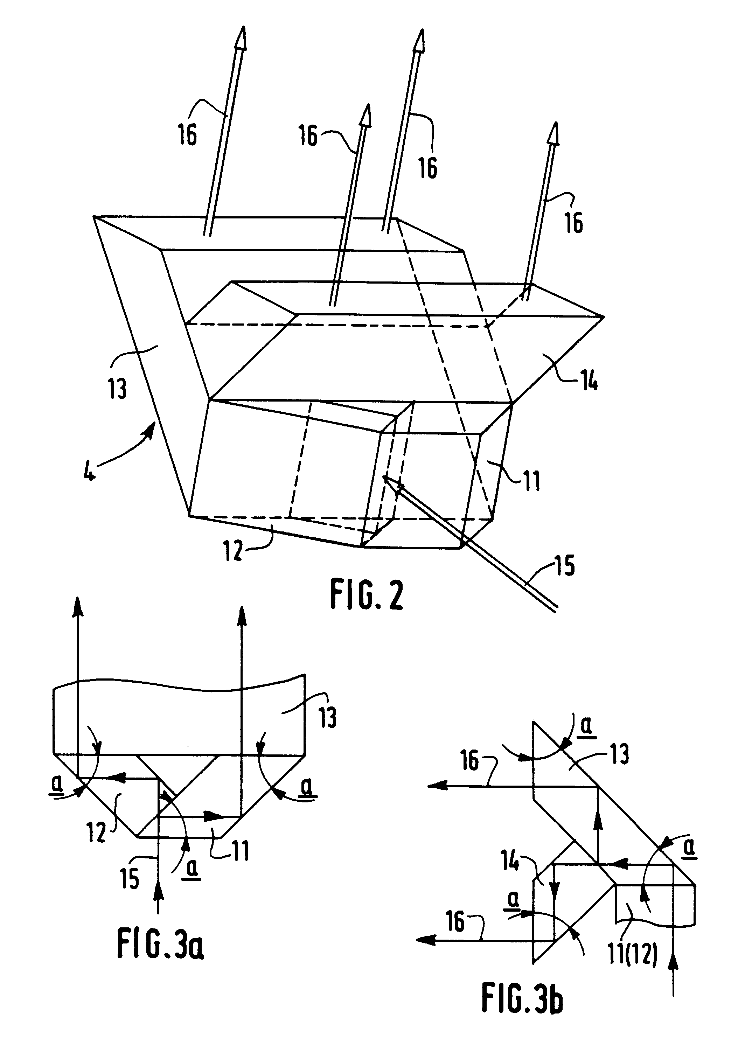

Les angles a des figures 3a et 3b sont égaux à 45°.

Les prismes 12 et 14 sont traités de telle façon qu'une fois assemblés avec les prismes 11 et 13, les interfaces 11-12 et 13-14 soient semi-réfléchissantes à la longueur d'onde considérée.

Comme on le voit sur la figure 3a le faisceau incident 15 est séparé une première fois en deux faisceaux à l'interface entre les prismes 11 et 12. Ces deux faisceaux, après réflexion, pénètrent parallèlement l'un à l'autre dans le prisme 13. Ces deux faisceaux sont ensuite chacun séparés en deux faisceaux au niveau de l'interface entre les prismes 13 et 14 comme montré à la figure 3b. Après réflexion, il en résulte quatre faisceaux de sortie parallèles 16 qui, si les dimensions des prismes 11 - 14 sont convenablement choisies, sont alignés sur les quatre arêtes d'un prisme à section carrée.

Les faisceaux de sortie 16 sont en outre orthogonaux au faisceau incident 15.

Cette configuration des quatre faisceaux ne représente bien entendu qu'un cas particulier. Dans le cas général, qui permet d'obtenir 3 composantes indépendantes de la vitesse, on utilise au moins 3 faisceaux lumineux interférant entre eux, ces faisceaux devant alors se trouver à des distances différentes de l'axe optique de la lentille de focalisation. Il faut par ailleurs que les angles entre les faisceaux interférants soient suffisamment importants pour que l'on puisse facilement différencier les composantes de la vitesse.

## Revendications

1. Sonde vélocimétrique à laser comportant des moyens (1-6) pour engendrer simultanément au moins deux systèmes de franges d'interférences dans un volume de mesure unique et des moyens de mesure (8-10) pour déterminer au moins deux composantes de la vitesse d'une particule traversant le champ de franges à partir d'un signal représentatif de la lumière rétro-diffusée par cette particule, caractérisée par le fait que lesdits systèmes de franges ont une même longueur d'onde et que les moyens de mesure sont agencés pour déterminer lesdites au moins deux composantes de la vitesse de la particule par analyse fréquentielle dudit signal.

2. Sonde selon la revendication 1, dans lequel les moyens pour engendrer les systèmes de franges d'interférence comprennent des moyens pour former quatre faisceaux laser parallèles.

3. Sonde selon la revendication 2, dans laquelle les quatre faisceaux forment les arêtes d'un prisme à base en forme de losange ou de rectangle, et notamment en forme de carré.

4. Sonde selon l'une quelconque des revendications 1 à 3, dans laquelle les moyens pour engendrer les systèmes de franges comprennent des moyens pour former des faisceaux laser d'intensités différentes.

5. Sonde selon l'une quelconque des revendications 1 à 3, comportant des moyens pour supprimer sélectivement et temporairement au moins un des systèmes de franges.

6. Sonde selon la revendication 5, dans laquelle les moyens pour supprimer des systèmes de franges comprennent des moyens pour changer la polarisation des faisceaux à partir desquels ces systèmes sont obtenus.

## Patentansprüche

1. Velocimetrische Lasersonde, die mit Mitteln (1-6) ausgestattet ist, um mindestens zwei Interferenzstreifensysteme gleichzeitig in einem einzigen Meßvolumen zu erzeugen, sowie mit Meßmitteln (8-10) zur Bestimmung von mindestens zwei Komponenten der Geschwindigkeit eines das Streifenfeld durchquerenden Teilchens ausgehend von einem typischen Signal des von diesem Teilchen rückgestreuten Lichts, dadurch gekennzeichnet, daß die besagten Streifensysteme ein und dieselbe Wellenlänge aufweisen und daß die Meßmittel für die Bestimmung der besagten mindestens zwei Komponenten der Teilchengeschwindigkeit durch Frequenzanalyse des besagten Signals eingerichtet sind.

2. Sonde nach Anspruch 1, bei der die Mittel zur Erzeugung der Interferenzstreifensysteme Mittel zur Bildung von vier parallelen Laserstrahlen umfassen.

3. Sonde nach Anspruch 2, bei der die vier Strahlen die Kanten eines Prismas mit rautenförmiger oder rechteckiger, insbesondere mit quadratischer Grundfläche bilden.

4. Sonde nach Anspruch 1, 2 oder 3, bei der die Mittel zur Erzeugung der Streifensysteme Mittel zur Bildung von Laserstrahlen unterschiedlicher Intensität umfassen.

5. Sonde nach Anspruch 1, 2 oder 3, die mit Mitteln ausgestattet ist, um wenigstens eines der Streifensysteme selektiv und temporär zu unterdrücken.

6. Sonde nach Anspruch 5, bei der die Mittel zur Unterdrückung von Streifensystemen Mittel zur Änderung der Polarisierung der Strahlen umfassen, aus denen diese Systeme erzeugt werden.

## Claims

1. Laser velocimetric probe which includes means (1-6) for simultaneously generating at least two interference fringe systems in a single measurement volume and measurement means (8-10) for determining at least two components of the velocity of a particle passing through the fringe field from a signal representing the light backscattered by this particle, characterized in that the said fringe systems have the same wavelength and that the measurement means are arranged in order to determine the said at least two components of the particle velocity by frequency analysis of the said signal.

2. Probe according to Claim 1, in which the means for generating the interference fringe systems comprise means for forming four parallel laser beams.

3. Probe according to Claim 2, in which the four beams form the edges of a prism having a rhomb-shaped or rectangle-shaped base, and especially a square-shaped base.

4. Probe according to Claims 1 to 3, in which the means for generating the fringe systems comprise means for forming laser beams of different intensities.

5. Probe according to Claims 1 to 3, which includes means for temporarily and selectively eliminating at least one of the fringe systems.

6. Probe according to Claim 5, in which the means for eliminating fringe systems comprise means for changing the polarization of the beams from which these systems are obtained.

FIG.1

EP 0 645 645 B1

FIG. 2

FIG.3a

FIG.3b